(19) Europäisches Patentamt
European Patent Office
Office européen des brevets

(11) **EP 4 733 773 A1**

(12) **EUROPEAN PATENT APPLICATION**

(43) Date of publication:
**29.04.2026 Bulletin 2026/18**

(21) Application number: **24208956.3**

(22) Date of filing: **25.10.2024**

(51) International Patent Classification (IPC):
*G01Q 10/06* (2010.01)

(52) Cooperative Patent Classification (CPC):
**G01Q 10/065;** G01Q 60/32

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Ecole Polytechnique Fédérale de Lausanne (EPFL)**
**1015 Lausanne (CH)**

(72) Inventors:
• **FANTNER, Georg Ernest**
**1015 Lausanne (CH)**
• **ASMARI, Navid**
**1015 Lausanne (CH)**
• **REZZONICO, Luca**
**1015 Lausanne (CH)**

(74) Representative: **Schaad, Balass, Menzl & Partner AG**
**Bellerivestrasse 20**
**Postfach**
**8034 Zürich (CH)**

(54) **SCANNING PROBE MICROSCOPE**

(57) A scanning probe microscope (10) is described, comprising a probe (1) with a cantilever (11) carrying a tip (12), the scanning probe microscope configured to generate a first actuating motion changing a distance of the tip (12) with respect to a sample surface, a detector (4) configured to detect a tip position and to output a tip position signal, a control circuit (5) configured to generate a first control signal using the tip position signal, the scanning probe microscope being configured to generate a second actuating motion adapting a distance between the probe (1) and the sample surface using the first control signal, wherein the control circuit (5) is configured to generate a second control signal, the scanning probe microscope being configured to generate, using the second control signal, a third actuating motion at least partially opposing detachment-induced oscillations of the cantilever (11) induced by detaching of the tip (12) from the sample surface while retracting the probe (1).

Fig.1

**Description**

**Field of the invention**

The present invention relates to a scanning probe microscope for scanning a sample surface and method of operating a scanning probe microscope.

**Background of the invention**

Scanning probe microscopes are used to characterize samples by scanning a probe over a sample surface where the probe interacts with the sample surface. An example of a scanning probe microscope is the atomic force microscope (G. Binnig, C.F. Quate and Ch. Gerber, Phys. Rev. Lett. 56, 930, 1986) representing a versatile microscopy tool for nanoscale characterization and manipulation. Thereby, topographic images of a surface with a resolution down to the nanometer or even sub-nanometer range can be achieved by using a probe comprising a cantilever with a tip arranged at a free end of the cantilever.

While scanning the surface of a sample, the tip of the probe is brought in close proximity to or in contact with the surface. Depending on the interaction between the tip and the surface, the free end of the cantilever is deflected, providing a measure for the forces arising between the tip and the surface. The deflection of the cantilever can for example be measured by detecting a displacement of a laser beam reflecting off the cantilever using a position sensitive photodetector. The deflection of the cantilever may also be detected by other methods such as capacitive detection, piezoresistive detection, piezoelectric detection etc.

An atomic force microscope can be operated in various modes, such as static (or contact, respectively) mode or dynamic (or oscillating/tapping, respectively) mode. In static mode, the tip and the sample are continuously in contact while the sample is scanned, and the deflection signal is used to adjust the position of the sample stage or the probe such that the tip-sample interaction stays within a predefined range, forming a feedback loop in the vertical direction of motion. In dynamic mode, the cantilever typically moves periodically at or near its resonance frequency in the proximity of the sample surface such that the tip touches the surface only for a short time. Features of the sample may then modulate the amplitude, phase and/or frequency of the cantilever periodic motion due to the tip-sample interaction. The change in amplitude, phase and/or frequency is therefore used as a feedback signal to control the vertical position of the sample stage or the probe accordingly.

Although the tip-sample interaction causes the changes in amplitude, phase and/or frequency, the tip-sample interaction is not directly measured in tapping mode. Without having a direct control on the force, only an average response of multiple interactions is detected. In order to improve on this aspect, the pulsed-force mode or dynamic mode of off-resonance tapping, respectively, has been developed (see e.g. A. Rosa-Zeiser et al., Meas. Sci. Technol. 8 (1997) 1333-1338 or Nievergelt et al., Nature Nanotechnology 13 (2018) 696-701). In off-resonance tapping mode, the probe and the sample move in a periodic fashion with respect to each other where the attractive and repulsive forces from the sample cause the cantilever to deflect during one cycle of periodic motion. The changes in deflection are recorded in the form of an interaction curve which is monitored to obtain information about the sample properties. Different to (resonant) tapping mode, part of the interaction curve, such as for example a peak force, is used as a feedback signal to control the vertical position of the sample stage or the probe.

**Summary of the invention**

Since the tip-sample interaction is typically not controlled over the entire cycle of relative motion between the cantilever and the sample stage in off-resonance tapping mode, events modifying the interaction curve when the tip-sample interaction is not controlled may not be corrected, which may lead to undesired distortions of the interaction curve. For example, oscillations can occur in the interaction curve upon detachment of the tip from the sample while retracting the probe, degrading the imaging and limiting the performance of the scanning probe microscope.

It is therefore an object of the invention to provide a scanning probe microscope and a method of operating a scanning probe microscope which at least partially improve the prior art and avoid at least part of the disadvantages of the prior art.

According to the present invention, this object is achieved by the features of the independent claims. In addition, further advantageous embodiments follow from the dependent claims and the description as well as the figures.

According to an aspect of the invention, this object is particularly achieved by a scanning probe microscope for scanning a sample surface, comprising a probe with a cantilever carrying a tip, the scanning probe microscope configured to generate a first actuating motion changing a distance of the tip with respect to the sample surface, a detector configured to detect a tip-sample interaction and/or tip position and to output an interaction signal and/or position signal, a control circuit comprising a first controller configured to generate a first control signal using the interaction signal and/or position signal, wherein the scanning probe microscope is configured to generate a second actuating motion adapting a distance between the probe and the sample surface using the first control signal so as to maintain at least a part of the interaction signal and/or position signal within a predetermined range, wherein the control circuit comprises a second controller configured to generate a second control signal, wherein the scanning probe microscope is configured to generate, using the second control signal, a third actuating motion at least partially opposing detachment-induced oscillations of the cantilever induced by detaching of the tip from the sample surface while retracting the probe.

In particular, the first actuating motion may cause a relative motion between the probe and the sample changing a distance of the tip with respect to the sample surface. The relative motion between the probe and the sample caused by the first actuating motion may be a periodic motion. The first control signal may be used to control by the second actuating motion the tip-sample interaction to be within a predetermined range. Therefore, the first controller may be used to implement a first control or feedback loop running directly on the tip-sample interaction.

While retracting the probe from the sample, oscillations of the cantilever may occur upon detachment of the tip, an effect which is also known as snap-off ringing. The detachment-induced oscillations of the cantilever can harm the tip and/or the sample surface. Furthermore, the performance of the scanning probe microscope may be limited once the oscillations persist from one cycle of the relative motion between the tip and the sample surface to the next cycle, as the tip-sample interaction curves may be distorted. Using the second controller and the second control signal, respectively, the detachment-induced oscillations of the cantilever can actively be attenuated due to the third actuating motion generated based on the second control signal at least partially opposing the detachment-induced oscillations of the cantilever. Preferably, the third actuating motion is configured to counteract the detachment-induced oscillations of the cantilever, in particular, without necessarily being restricted to a strictly inverse motion to the detachment-induced oscillations. The second control signal may therefore be used as a feedback signal of the control circuit to directly affect the cantilever and to actively counteract the detachment-induced oscillations of the cantilever. In particular, by actively attenuating the detachment-induced oscillations of the cantilever, the sampling rate of the scanning probe microscope can be increased compared to conventional operation schemes where the waiting time between successive cycles required for the detachment-induced oscillations to fade limits the sampling rate of the scanning probe microscope.

The first controller may be implemented in a first control loop of the control circuit. The second controller may be implemented in a second control loop of the control circuit. The first controller and/or the second controller may be implemented by one or more software modules of a computer program product configured to control the control circuit and/or by one or more electronic components of the control circuit.

The tip position may be used to measure the tip-sample interaction such that the position signal may be a direct or indirect representation of the tip-sample interaction, effectively corresponding to a (tip-sample) interaction signal. Therefore, the detector may be configured to detect a tip-sample interaction and to output an interaction signal. In particular, the tip-sample interaction may be measured by the deflection of the cantilever caused by attractive and repulsive forces between the tip and the sample. Accordingly, the detector may detect the tip-sample interaction by detecting the deflection of the cantilever. The terms "tip position" and "tip-sample interaction" as used in the present context may therefore be understood to include a tip position and/or a tip-sample interaction and/or parameter related to the tip position. Accordingly, the terms "position signal" and "interaction signal" as used in the present context may be understood to include a position signal and/or an interaction signal and/or signal related to the tip position. The detector may therefore be configured to detect a tip-sample interaction and/or a tip position and/or a parameter related to the tip position and to output a position signal and/or an interaction signal and/or a signal related to the tip position.

The detector may comprise a readout laser directed onto the cantilever and a position sensitive photodetector configured to detect the laser beam reflected off the cantilever in an optical lever setup. The tip-sample interaction may be represented by a force curve generated by a processing circuit of the control circuit configured to process the interaction signal of the detector.

The control circuit may be configured to generate a tip-sample interaction curve using the interaction signal of the detector and the first controller may be configured to generate the first control signal using a comparison of at least a part of the tip-sample interaction curve to at least a part of a reference interaction curve.

By comparing at least a part of the tip-sample interaction curve to at least a part of a reference interaction curve during a cycle of the relative motion between the tip and the sample surface, the first controller may be used to control the tip-sample interaction to be within a predetermined range with respect to the reference interaction curve.

In particular, the control circuit may use the first control signal to actuate a vertical scan actuator so as to maintain the tip-sample interaction within a predetermined range with respect to the reference interaction curve. The control circuit may use the first control signal to actuate the vertical scan actuator such that an essentially steady-state tip-sample interaction at a predetermined position of the tip-sample interaction curve, for example at the position where the peak tip-sample interaction occurs, can be maintained.

The reference interaction curve may be a tip-sample interaction curve generated by the control circuit from the interaction signal of the detector at a reference position of the sample surface. The vertical scan actuator may comprise a z-actuator of a sample stage and/or a z-actuator of a cantilever holder.

As an alternative to generating a tip-sample interaction curve and comparing at least a part of this curve to a reference interaction curve as an input to the first feedback loop, the first feedback loop may also use a comparison of the tip-sample interaction and/or the tip position to a fixed reference value, a time dependent reference value, an amplitude, or a global maximum or minimum value thereof. As a further alternative, the first feedback loop may take as an input one or more Fourier components from the deflection signal of the cantilever and compare their amplitude and phase to one or more reference values.

In some embodiments, the scanning probe microscope comprises at least one of a first actuator, a second actuator or a third actuator, wherein the first, second or third actuator is configured to generate at least one of the first, second or third actuating motion.

In some embodiments, the first actuator is configured to generate one of the first, second or third actuating motion, wherein the second actuator is configured to generate one or two of the first, second or third actuating motion.

In some embodiments, the first actuator is configured to generate the first actuating motion, the second actuator is configured to generate the second actuating motion, and the third actuator is configured to generate the third actuating motion.

The scanning probe microscope may therefore comprise an actuator configured to generate the first, second and the third actuating motion. The scanning probe microscope may also comprise an actuator configured to generate two of the first, second or third actuating motion. The remaining actuating motion of the first, second or third actuating motion may then be generated by another actuator. In a further variant, the scanning probe microscope may comprise three actuators each configured to generate one of the first, second and third actuating motion.

In some embodiments, at least one of the first, second or third actuator is configured to directly actuate the cantilever, preferably by deformation.

In some embodiments, at least one of the first, second or third actuator is a piezoelectric actuator, a photothermal actuator, an electrothermal actuator, a magnetic actuator, an electrostatic actuator, a magnetostrictive actuator or an electrostrictive actuator.

The first, second and/or third actuator may, in further examples, be a vertical scan actuator such as a z-actuator of a sample stage and/or a z-actuator of the cantilever.

For example, a first actuator generating the first actuating motion the relative motion between the tip and the sample surface may act on the sample stage whereas the third actuating motion may be applied to the cantilever by a third actuator acting on the cantilever. In a further example, a first actuator generating the periodic relative motion between the tip and the sample surface may act on the cantilever and the third actuating motion may be applied to the same first actuator. In a further example, a first actuator generating the relative motion between the tip and the sample surface may act on the cantilever whereas the third actuating motion may be applied to the cantilever by a third actuator acting on the cantilever. Accordingly, the second actuating motion may for example be applied to the sample stage and/or the cantilever by a second actuator.

Preferably, the scanning probe microscope is an atomic force microscope.

The first actuating motion changing the distance between the tip and the sample surface may be generated by at least one of the first, second or third actuator which may be configured to directly move the cantilever. The actuator may actuate the cantilever by a periodic excitation signal applied to the actuator. Alternatively, the periodic relative motion changing the distance between the tip and the sample surface may be generated by the actuator being configured to move the sample stage. Actuating the cantilever to generate the relative motion between the tip and the sample surface provides the advantage that the excitation rates of the relative motion can be increased by circumventing scanning speed limitations due to slow dynamics of the sample stage.

A piezoelectric actuator may be implemented using a piezoelectric layer or a piezoelectric stack on the cantilever. An electrothermal actuator may be implemented by trilayer cantilevers having an integrated metal heater. An electric current may increase the temperature due to Joule heating and the material may be subject to thermal expansion such that the cantilever may be bent. A photothermal actuator may be implemented by a drive laser that heats up a bi-morph cantilever causing it to bend or a light source that asymmetrically heats up a cantilever causing it to bend, or a light source that heats up an asymmetrically shaped cantilever causing it to bend.

In some embodiments, the control circuit is configured to determine a tip-sample interaction period and to deactivate the second controller during at least a part of the tip-sample interaction period and to activate the second controller during a time span outside the tip-sample interaction period.

Therefore, the active attenuation can be limited to a time span where the detachment-induced oscillations of the cantilever occur while preventing that the interaction curve is altered by the second control signal and the third actuating motion during the tip-sample interaction period. The second controller can therefore be used to actively attenuate the undesired detachment-induced oscillations of the cantilever without degrading the operation of the scanning probe microscope during the tip-sample interaction period where the tip is in contact with the sample. Deactivating the second controller may also include setting the second control signal to zero. The tip-sample interaction period may be determined by recording a tip-sample interaction curve without generating a second control signal. In particular, the tip-sample interaction period may be determined by detecting changes in the interaction signal of the detector occurring due to the tip contacting the sample and being detached from the sample. The time span outside the tip-sample interaction period where the second controller is to be activated may be determined by generating a tip-sample interaction curve without active attenuation and detecting the detachment-induced oscillations of the cantilever without active attenuation.

In some embodiments, the second control signal is proportional to the velocity or to the position or to a sum of the velocity and the position of the tip with a proportional gain $k_p$.

In particular, the second control signal may be represented by an external damping force $F_D$ being proportional to the velocity of the tip:

$$F_D = -mk_p\dot{y}(t),$$

with $m$ the effective mass of the cantilever and $y(t)$ the tip position.

The second control signal may also be proportional to the tip position $y(t)$ or to a sum or linear combination $A\dot{y}(t) + By(t)$, respectively, of the velocity and the tip position.

In some embodiments, the second controller is configured to maximize the proportional gain $k_p$ up to an upper bound which, for the third actuating motion being generated by a piezoelectric actuator, is determined by the ratio $V_{max}/(\omega_d A)$ with $V_{max}$ the maximum voltage limit, $\omega_d$ the resonance frequency of the cantilever and A the amplitude of the detachment-induced oscillations at the onset of the detachment-induced oscillations.

In some embodiments, the second controller is configured to maximize the proportional gain $k_p$ up to an upper bound which, for the third actuating motion being generated by an electrothermal or photothermal actuator, is determined by the ratio $\sqrt{P_{max}R_{eq}}/(\omega_d A)$ with $P_{max}$ the maximum power limit and $R_{eq}$ the equivalent impedance of the actuator.

By increasing the proportional gain $k_p$, the detachment-induced oscillations of the cantilever can actively be attenuated. By maximizing the proportional gain $k_p$, the active attenuation of the detachment-induced oscillations of the cantilever can therefore be optimized.

In some embodiments, the second control signal is time delayed with respect to the interaction signal and/or position signal by a time delay $\Delta t$, wherein preferably $\Delta t=\pi/(2\omega_d)$ or $\Delta t=\pi/(\omega_d)$, with $\omega_d$ being the resonance frequency of the cantilever.

Time delaying the second control signal with respect to the interaction signal and/or position signal provides the advantage that the velocity of the tip can be approximated in an efficient fashion and is therefore especially advantageous for a second control signal being proportional to the velocity. By approximating the velocity, an implementation of a separate velocity sensor can be avoided. Furthermore, increased noise levels due to differentiation of the interaction signal and/or position signal to obtain the velocity can be prevented.

The tip velocity may therefore be phase shifted with respect to the tip position as follows:

$$\dot{y}(t) = -\omega_d y(t - \Delta t)$$

with $\Delta t=\pi/(2\omega_d)$ for a second control signal proportional to the velocity or $\Delta t=\pi/\omega_d$ for a second control signal proportional to the position.

In some embodiments, the scanning probe microscope is configured to generate the first actuating motion at an excitation frequency Q which is smaller than the resonance frequency $\omega_d$ of the cantilever, wherein preferably $Q < 0.2\,\omega_d$, particularly preferably $Q < 0.1\,\omega_d$.

The scanning probe microscope is therefore preferably configured to operate in off-resonance tapping mode with the excitation frequency Q being far below the resonance frequency $\omega_d$ or the natural frequency $\omega_n$ of the cantilever. Therefore, it may be possible to avoid the dynamics of a resonant system for which tuning of the optimal scanning parameters with respect to the excitation of the periodic relative motion between the cantilever and the sample surface may be intricate.

In some embodiments, the control circuit is configured to compare an interaction value of the tip-sample interaction curve to a reference interaction value of the reference interaction curve. As mentioned above, the tip-sample interaction curve may, in some embodiments, be a tip position curve. Accordingly, the reference interaction curve may, in some embodiments, be a reference tip position curve.

The first controller may therefore control the tip-sample interaction based on a comparison of a single value of the tip-sample interaction curve to the respective reference value of the reference interaction curve during a cycle of the periodic relative motion.

In particular, the control circuit may be configured to compare a peak interaction value of the tip-sample interaction curve to a peak reference interaction value of the reference interaction curve.

The peak interaction value of the tip-sample interaction curve may be the peak point of the deflection of the cantilever, reflecting the peak force. By controlling the peak force, a precise control of the maximum exchanged forces between the tip and the sample can be provided such that damaging of the tip and/or the sample can be avoided or mitigated.

The peak point or value may also be a minimum value, for example of a deflection curve of the cantilever. This may for example be the case if the cantilever is directly actuated where the excitation signal is overlayed with the tip-sample interaction curve.

According to a further aspect, the present invention is also directed to a method of operating a scanning probe microscope according to the present disclosure, comprising the steps of: generating a first actuating motion changing a distance of the tip with respect to the sample surface; detecting by the detector a tip-sample interaction and/or tip position and outputting an interaction signal and/or position signal; generating by the first controller a first control signal using the interaction signal and/or position signal; generating a second actuating motion adapting a distance between the probe and the sample surface using the first control signal so as to maintain at least a part of the interaction signal and/or position signal within a predetermined range; generating by the second controller a second control signal; generating, using the second control signal, a third actuating motion at least partially opposing detachment-induced oscillations of the cantilever induced by detaching of the tip from the sample surface while retracting the probe.

In some embodiments, the control circuit determines a tip-sample interaction period and deactivates the second controller during at least a part of the tip-sample interaction period and activates the second controller during a time span outside the tip-sample interaction period.

In some embodiments, the second controller generates a second control signal which is time delayed with respect to the interaction signal and/or position signal by a time delay $\Delta t$, wherein preferably $\Delta t=\pi/(2\omega_d)$ or $\Delta t=\pi/(\omega_d)$ , with $\omega_d$ being the resonance frequency of the cantilever.

In some embodiments, the control circuit generates a tip-sample interaction curve with deactivated second controller and extracts one or more control parameters for the second controller, preferably the resonance frequency $\omega_d$ of the cantilever, an amplitude A of the detachment-induced oscillations at the onset of the detachment-induced oscillations and/or a tip-sample interaction period, from the tip-sample interaction curve with deactivated second controller.

Therefore, parameters usable for the active attenuation of the detachment-induced oscillations of the cantilever such as the resonance frequency $\omega_d$ of the cantilever and/or the amplitude A of the detachment-induced oscillations at the onset of the detachment-induced oscillations and/or the tip-sample interaction period and/or the time span outside the tip-sample interaction period where the second controller is to be activated can be obtained in a convenient fashion. Said parameters may be used together with technical data from the cantilever and/or the actuator such as for example the maximum voltage limit $V_{max}$, the maximum power limit $P_{max}$ and/or the equivalent impedance $R_{eq}$ of the actuator, to calculate the control parameters of the second controller such as for example the proportional gain $k_p$, the time delay $\Delta t$ etc.

According to a further aspect, the present invention is also directed to a computer program product comprising computer program code configured to control a control circuit of a scanning probe microscope according to the present disclosure such that the control circuit executes the steps of: controlling the scanning probe microscope to generate a first actuating motion changing a distance of the tip with respect to the sample surface; receiving an interaction signal and/or position signal generated by the detector; generating a first control signal using the interaction signal and/or position signal for a second actuating motion adapting a distance between the probe and the sample surface so as to maintain at least a part of the interaction signal and/or position signal within a predetermined range; generating a second control signal for a third actuating motion at least partially opposing detachment-induced oscillations of the cantilever induced by detaching of the tip from the sample while retracting the probe.

According to a further aspect, the object may also be achieved by a scanning probe microscope for scanning a sample surface, comprising a probe with a cantilever carrying a tip, an actuator configured to generate a periodic relative motion changing a distance of the tip with respect to the sample surface, a detector configured to detect a tip-sample interaction and/or tip position and to output an interaction signal and/or position signal, a control circuit configured to generate a tip-sample interaction curve and/or tip position curve using the interaction signal and/or the position signal of the detector and comprising a first controller configured to generate a first control signal for the scanning probe microscope using a comparison of at least a part of the tip-sample interaction curve and/or tip position curve to at least a part of a reference interaction curve and/or a position curve, wherein the control circuit comprises a second controller configured to generate a second control signal at least partially opposing detachment-induced oscillations of the cantilever induced by detaching of the tip from the sample surface while retracting the probe.

The control circuit may be configured to apply the second control signal to the actuator generating the periodic relative motion between the tip and the sample surface. In some embodiments, the control circuit is configured to apply the second control signal to a further actuator acting on the cantilever.

For example, the actuator generating the periodic relative motion between the tip and the sample surface may act on the sample stage whereas the second control signal may be applied to the cantilever by a further actuator acting on the cantilever. In a further example, the actuator generating the periodic relative motion between the tip and the sample surface may act on the cantilever and the second control signal may be applied to the same actuator. In a further example, the actuator generating the periodic relative motion between the tip and the sample surface may act on the cantilever whereas the second control signal may be applied to the cantilever by a further actuator acting on the cantilever.

The periodic relative motion changing the distance between the tip and the sample surface may be generated by the actuator being configured to directly move the cantilever. The actuator may actuate the cantilever by a periodic excitation signal applied to the actuator. Alternatively, the periodic relative motion changing the distance between the tip and the sample surface may be generated by the actuator being configured to move the sample stage. Actuating the cantilever to generate the periodic motion changing the distance between the tip and the sample surface provides the advantage that the excitation rates of the periodic relative motion can be increased by circumventing scanning speed limitations due to slow dynamics of the sample stage. The second control signal may be applied to the actuator configured to actuate the cantilever for generating the periodic relative motion between the tip and the sample surface or to a further actuator acting on the cantilever.

The actuator may be a piezoelectric actuator, a photothermal actuator, an electrothermal actuator, a magnetic actuator, an electrostatic actuator, a magnetostrictive actuator or an electrostrictive actuator.

In embodiments with a further actuator, the further actuator may be a piezoelectric actuator, a photothermal actuator, an electrothermal actuator, a magnetic actuator, an electrostatic actuator, a magnetostrictive actuator or an electrostrictive actuator.

## Brief description of the drawings

The present invention will be explained in more detail, by way of exemplary embodiments, with reference to the schematic drawings, in which:

Fig.1       shows components of an embodiment of an atomic force microscope configured to operate in off-resonance tapping mode;

Fig.2       shows an exemplary tip-sample interaction curve with representations of the cantilever at different points of the tip-sample interaction curve;

Fig.3       shows a block diagram of an embodiment of a control circuit;

Fig.4       shows a model of the cantilever dynamics;

Fig.5       shows an experimental tip-sample interaction curve with detachment-induced oscillations of the cantilever without active attenuation;

Fig.6a-e    show experimental tip-sample interaction curves of a piezoelectrically actuated cantilever at different excitation frequencies with deactivated and activated second controller;

Fig.7a-d    show experimental tip-sample interaction curves of an electrothermally actuated cantilever at different excitation frequencies with deactivated and activated second controller;

Fig.8a-b    show experimental tip-sample interaction curves of a photothermally actuated cantilever at different excitation frequencies with deactivated and activated second controller;

Fig.9a-b    show scanning images obtained by an embodiment of an atomic force microscope with deactivated and activated second controller.

## Detailed description of exemplary embodiments

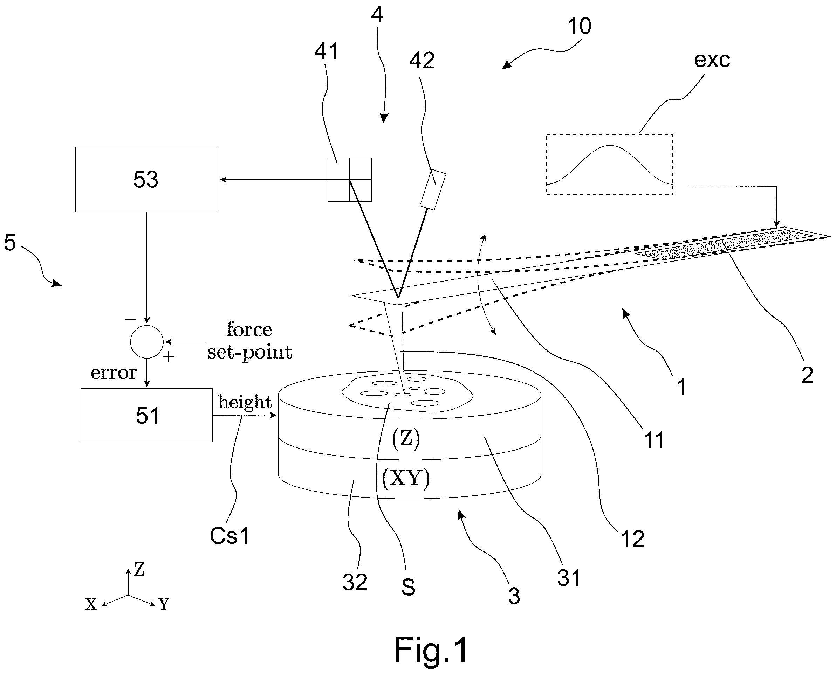

Figure 1 shows components of an embodiment of an atomic force microscope 10 configured to operate in off-resonance tapping mode. The atomic force microscope 10 comprises a probe 1 with a cantilever 11 carrying a tip 12 that scans a sample S. The sample S is positioned on a sample stage 3 comprising vertical scan stage 31 and a lateral scan stage 32. The atomic force microscope 10 comprises an actuator 2 arranged on the probe 1 and configured to bend the cantilever 11 by a first actuating motion so as to generate a relative motion changing the distance of the tip 12 with respect to the surface of the sample S, as indicated by the dashed representations of the cantilever 11. A sinusoidal excitation signal exc is used for the actuator 2 to generate the relative motion.

The atomic force microscope 10 further comprises a detector 4 in an optical lever setup comprising a position sensitive photodetector 41 which detects a laser beam of a readout laser source 42 reflected off the cantilever 11. The position sensitive photodetector 41 therefore detects the deflection of the cantilever 11 that is affected by the tip-sample interaction and outputs the deflection as an interaction signal. A control circuit 5 processes the interaction signal received from the detector 4 by subtracting the background motion of the cantilever 11 such as the relative motion from the cantilever excitation in a demodulation block 53 to obtain a tip-sample interaction curve. A first controller 51 generates a first control signal Cs1 for the sample stage 3 using a comparison of a force set point of a reference interaction curve, which may be a peak force value, and the corresponding (peak) force value of the tip-sample interaction curve. Using the first control signal Cs1, the sample stage 3 is moved by a second actuating motion in order to maintain an essentially steady-state tip-sample interaction by running the control on the tip-sample interaction using the comparison between a part of the tip-sample interaction curve and a part of the reference interaction curve.

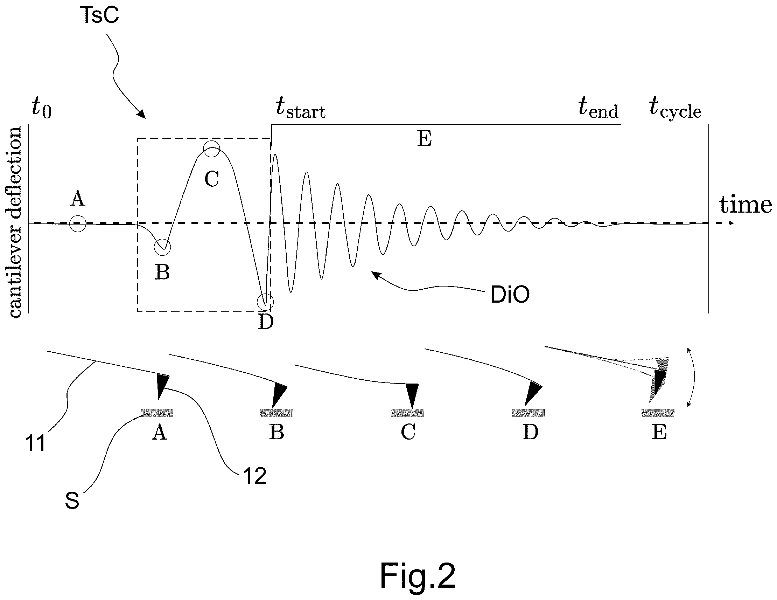

Figure 2 shows an exemplary tip-sample interaction curve during a cycle of the relative motion of the cantilever with representations of the probe with the cantilever 11 and the tip 12 at different points A-E of the tip-sample interaction curve TsC. The tip-sample interaction curve TsC is shown as the cantilever deflection against time, as measured by the detector 4 of Figure 1, with the background motion of the cantilever 11 from the cantilever excitation being removed. At point A, the tip 12 is far from the sample and the cantilever deflection is unchanged. Between point A and B, the tip 12 approaches the sample until at point B, the cantilever 11 snaps onto the surface of the sample S causing the cantilever 11 to bend downwards in the direction of the sample S. As the probe continues to approach the sample S, the maximum cantilever deflection reflecting the peak tip-sample interaction or the peak force, respectively, is reached at point C. The peak tip-sample interaction at point C is used by the first controller as the control parameter. After point C, the probe is retracted such that the cantilever deflection changes to the negative until at point D, the tip 12 detaches from the surface of the sample S (also denoted as "snap-off" of the tip 12). Upon detachment, the cantilever 11 starts to oscillate at its resonance frequency $\omega_d$, as shown by the situation E. The detachment-induced oscillations DiO fade over a period $|t_{start}-t_{end}|$. If the new cycle starts before the detachment-induced oscillations DiO are vanished, the part of the tip-sample interaction curve TsC where the tip is in contact with the sample surface, i.e. during the tip-sample interaction period (as indicated by the dashed box), can be distorted, degrading the operation of the atomic force microscope and potentially leading to tip and/or sample damage by dumping the residual energy into the sample during the next contact cycle.

Therefore, without any control on the detachment-induced oscillations DiO, the off-resonance tapping rate has to be limited to a comparatively low rate such that sufficient time can be provided for the detachment-induced oscillations to vanish before the next cycle starts. However, it may often not be feasible to only wait until the detachment-induced oscillations vanish and thus, distortions of the tip-interaction curves of subsequent cycles and damage of the tip and/or sample may not be avoided if the detachment-induced oscillations are not actively attenuated.

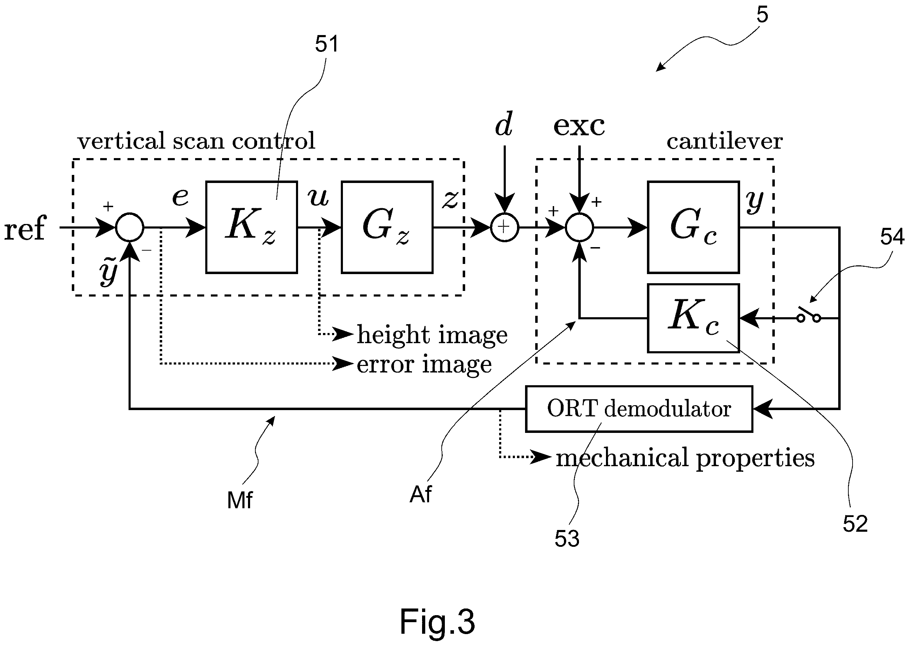

Figure 3 shows a block diagram of an embodiment of a control circuit 5 comprising a first controller 51 and a second controller 52. The peak tip-sample interaction of the reference interaction curve used as a force set point is denoted by ref and input to the vertical scan control. The changes in topography of the sample are denoted by d and exc is the excitation signal applied to the cantilever actuator. The deflection signal *y* is used to extract mechanical properties such as for example stiffness, adhesion, dissipation etc., from the sample as the signal passes through the ORT (off-resonance tapping) demodulator 53. From the demodulated tip-sample interaction curve, the peak tip-sample interaction $\tilde{y}$ is extracted and input to the vertical scan control. The vertical scan control comprises the first controller 51, as denoted by $K_z$. The corresponding dynamics of the z-positioner, which may be a vertical scan actuator of the sample stage or a vertical scan actuator moving the cantilever, is denoted by $G_z$. The error signal *e* obtained from the comparison of the force set point ref and the peak tip-sample interaction $\tilde{y}$ is used as an input to the first controller 51 and can be used to generate an error image of the sample. The output *u* of the first controller 51 used as a first control signal for the z-positioner can be used to generate a height image of the sample.

The part of the control circuit 5 related to the cantilever comprises the second controller 52, as denoted by *Kc*. The corresponding dynamics of the cantilever is denoted by *Gc*. The control circuit 5 therefore comprises a main feedback loop Mf for the vertical scan control comprising the first controller 51 and an additional feedback loop Af for the cantilever control comprising the second controller 52. The additional feedback loop Af for the cantilever control further comprises a conditional switch 54 by which the second controller 52 can selectively be activated and deactivated. The conditional switch 54 may, in some embodiments, implemented in the control software with a command setting the second control signal to zero if the conditional switch 54 is to be opened. The conditional switch 54 is configured to activate the second controller 52 during the time span $|t_{start}-t_{end}|$ where the detachment-induced oscillations of the cantilever occur and to deactivate the second controller 52 during the tip-sample interaction period (dashed box in Figure 2).

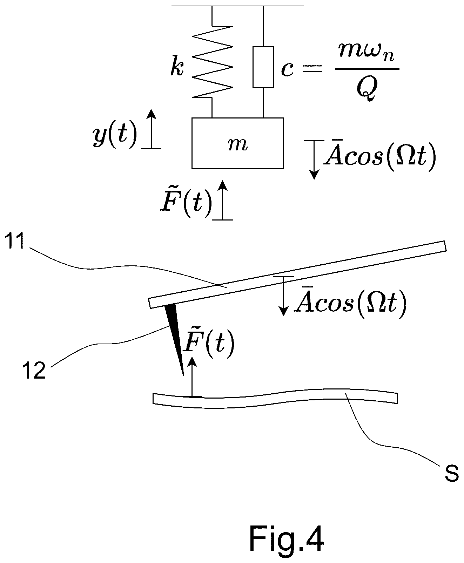

Figure 4 shows a simplified model of the dynamics of the cantilever 11 with effective mass *m,* stiffness *k* and damping *c*. The simplified model can be described by the equation of motion:

$$m\ddot{y}(t) + c\dot{y}(t) + ky(t) = \hat{A}\cos(\Omega t) + \tilde{F}(t)$$

with *y(t)* the position of the tip 12 and $\omega_n$ the natural frequency of the cantilever 11. The excitation signal of frequency Q and

amplitude $\hat{A}$ applied to the cantilever 11 is represented with $\hat{A}cos(\Omega t)$ and the external applied forces of the tip-sample interaction are modeled with $\tilde{F}(t)$. Since the tip sample interaction forces only apply on the system in the region where the tip and sample are close to each other, the interaction forces are small during the time span where the detachment-induced oscillations occur, such that

$$\tilde{F}(t) \approx 0 \qquad t_{start} < t < t_{end}$$

Neglecting the external excitation term $\hat{A}\cos(\Omega t)$ due to the external excitation frequency $\Omega$ being significantly smaller than the natural frequency $\omega_n$ of the cantilever 11 and adding the second control signal yields the simplified equation of motion with added second control signal:

$$\ddot{y}(t) + \frac{\omega_n}{Q}\dot{y}(t) + \omega_n^2 y(t) = -k_p \dot{y}(t)$$

with  $c = \frac{m\omega_n}{Q}$  and  $\omega_n = \sqrt{k/m}$ . The second control signal is proportional to the velocity of the cantilever with a proportional gain $k_p$.

From the general solution of the simplified equation of motion with added second control signal, one can obtain for the derivative of $y$ in cases where the detachment-induced oscillations of the cantilever are slowly attenuated

$$\dot{y}(t) = -\omega_d A \sin\left(\omega_d t + \phi - \frac{\pi}{2}\right) = -\omega_d y(t - \Delta t)$$

with $\phi$ the phase, A the amplitude of the detachment-induced oscillations at the onset of the detachment-induced oscillations, $\omega_d$ the cantilever resonance frequency, and the time delay $\Delta t$ that should be applied on the interaction signal or the position signal, respectively,

$$\Delta t = \frac{\pi}{2\omega_d}$$

The transfer function of the second controller can accordingly be obtained as

$$K_c(s) = k_p e^{-s\Delta t}$$

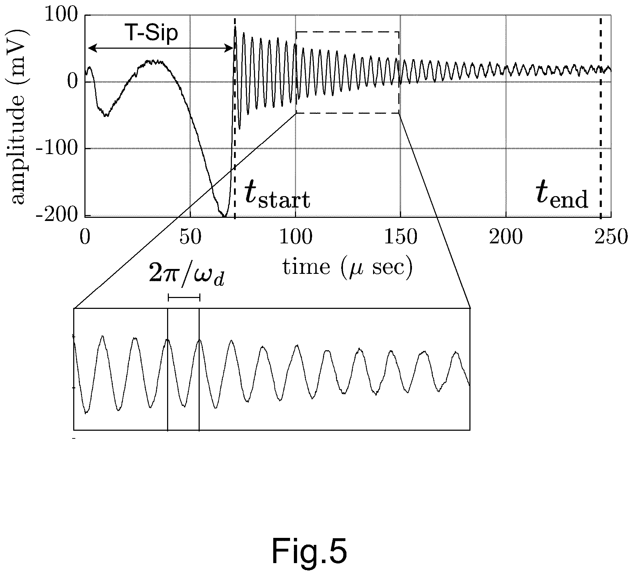

Figure 5 shows an experimental tip-sample interaction curve with detachment-induced oscillations of the cantilever without active attenuation by a third actuating motion. The conditional switch 54 as shown in Figure 3 activates the second controller only during the time span | $t_{start}$-$t_{end}$ | where the detachment-induced oscillations of the cantilever occur such that the second controller does not affect the tip-sample interaction period T-Sip. From a measured tip-sample interaction curve as shown in Figure 5, the control circuit can determine the tip-sample interaction period T-Sip and the time span | $t_{start}$-$t_{end}$ | . Furthermore, the control circuit can extract the cantilever resonance frequency $\omega_d$ from the measured detachment-induced oscillations, from which the required time delay $\Delta t$ can be obtained.

Having determined the required time delay $\Delta t$, the optimal value for the proportional gain $k_p$ can be determined. The upper bound for the values of the proportional gain $k_p$ depends on the actuator used. For a piezoelectric actuator generating the third actuating motion, the upper bound is determined by the maximum voltage limit $V_{max}$ to prevent voltage breakdown:

$$|k_p|\omega_d A < V_{max}$$

For an electrothermal or photothermal actuator generating the third actuating motion, the upper bound is determined by the maximum power that can be delivered to the actuator:

$$\frac{\left(k_p \omega_d A\right)^2}{R_{eq}} < P_{max}$$

with $R_{eq}$ the equivalent impedance of the actuator and $P_{max}$ the power limit of the actuator.

The parameters of the second controller $k_p$ and $\Delta t$ can therefore be obtained from a measured sample tip-sample interaction curve and from the technical parameters of the actuator used.

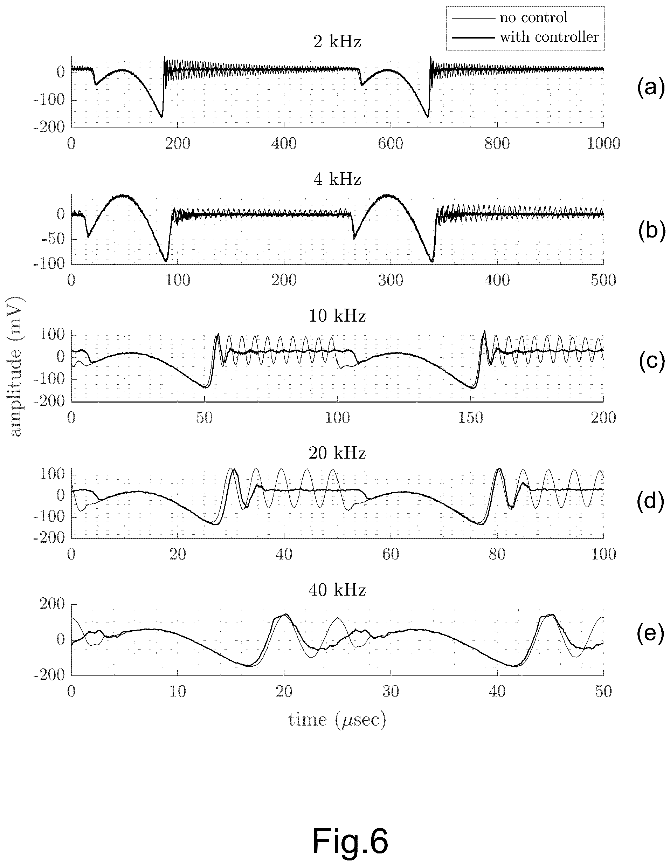

Figure 6a-e show experimental tip-sample interaction curves of a piezoelectrically actuated cantilever at different excitation frequencies with deactivated and activated second controller. The tip-sample interaction curves are obtained after subtracting the periodic background motion of the cantilever. The tip-sample interaction curves with deactivated second controller, i.e. without active attenuation of the detachment-induced oscillations by a third actuating motion, are shown by thin lines whereas the tip-sample interaction curves with activated second controller, i.e. with active attenuation of the detachment-induced oscillations by a third actuating motion, are shown by thick lines. The ORT excitation frequencies used are 2 kHz (Figure 6a), 4 kHz (Figure 6b), 10 kHz (Figure 6c), 20 kHz (Figure 6d) and 40 kHz (Figure 6e). It can be recognized that the detachment-induced oscillations are significantly attenuated when the second controller is activated while the tip-sample interaction curve remains essentially unaffected during the tip-sample interaction period. Furthermore, the second controller and the third actuating motion, respectively, attenuate the detachment-induced oscillations faster than its normal rate such that residual detachment-induced oscillations from a previous cycle when the tip snaps onto the sample are avoided. Therefore, the accuracy of the tip-sample interaction curves from which material properties of the sample are extracted, can be improved.

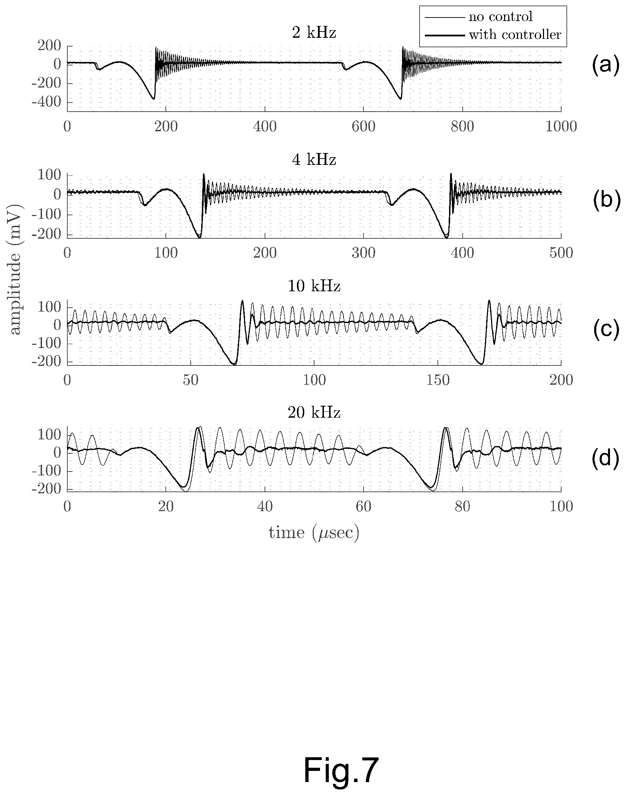

Figure 7a-d show experimental background-subtracted tip-sample interaction curves of an electrothermally actuated cantilever at different excitation frequencies with deactivated and activated second controller. The tip-sample interaction curves with deactivated second controller, i.e. without active attenuation of the detachment-induced oscillations by a third actuating motion, are again shown by thin lines whereas the tip-sample interaction curves with activated second controller, i.e. with active attenuation of the detachment-induced oscillations by a third actuating motion, are shown by thick lines. The ORT excitation frequencies used are 2 kHz (Figure 7a), 4 kHz (Figure 7b), 10 kHz (Figure 7c) and 20 kHz (Figure 7d). The detachment-induced oscillations are again significantly attenuated when the second controller is activated while the tip-sample interaction curve remains essentially unaffected during the tip-sample interaction period. With the second controller activated, residual detachment-induced oscillations from a previous cycle when the tip snaps onto the sample are avoided.

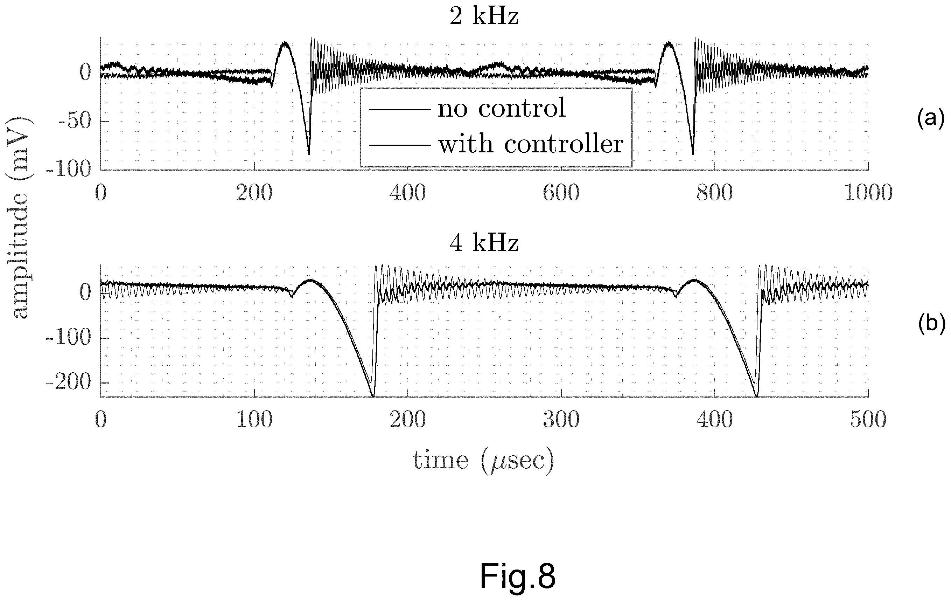

Figure 8a-b show experimental background-subtracted tip-sample interaction curves of a photothermally actuated cantilever at different excitation frequencies with deactivated and activated second controller. The tip-sample interaction curves with deactivated second controller, i.e. without active attenuation of the detachment-induced oscillations by a third actuating motion, are again shown by thin lines whereas the tip-sample interaction curves with activated second controller, i.e. with active attenuation of the detachment-induced oscillations by a third actuating motion, are shown by thick lines. The ORT excitation frequencies used are 2 kHz (Figure 8a) and 4 kHz (Figure 8b). The detachment-induced oscillations are significantly attenuated when the second controller is activated while the tip-sample interaction curve remains essentially unaffected during the tip-sample interaction period.

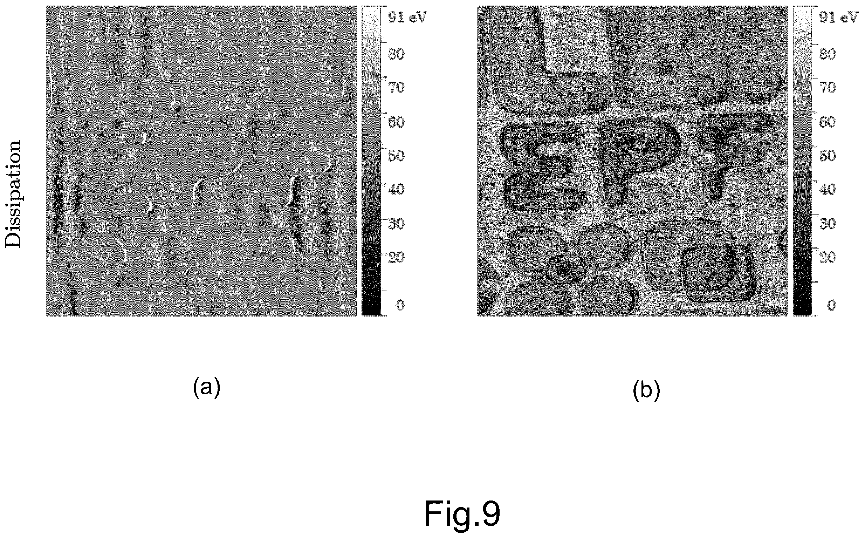

Figure 9a-b show scanning images in the dissipation channel as obtained by an embodiment of an ORT operated atomic force microscope with deactivated (Figure 9a) and activated (Figure 9b) second controller. The distortions during the tip-sample interaction period due to the detachment-induced oscillations adversely affect the tip-sample interaction curves and therefore hamper studying sample properties in ORT atomic force microscopy. Active attenuation of the detachment-induced oscillations allows to enhance the imaging quality by restoring the tip-sample interaction curves during the tip-sample interaction period without being altered by the detachment-induced oscillations. The difference in imaging quality, as recognizable in Figure 9a and 9b is due to the refinement of the tip-sample interaction curves by active attenuation of the detachment-induced oscillations such that the exchanged tip-sample interaction is represented in a clearer fashion. Furthermore, the risk of tip-sample damage is reduced. The imaging shown in Figure 9 has been performed at an excitation frequency of 20 kHz with an electrothermally self-actuated cantilever with a resonance frequency of 300 kHz.

**Claims**

1. A scanning probe microscope (10) for scanning a sample surface, comprising a probe (1) with a cantilever (11) carrying a tip (12), the scanning probe microscope configured to generate a first actuating motion changing a distance of the tip (12) with respect to the sample surface, a detector (4) configured to detect a tip-sample interaction and/or tip position and to output an interaction signal and/or position signal, a control circuit (5) comprising a first controller (51) configured to generate a first control signal using the interaction signal and/or position signal, wherein the scanning probe microscope is configured to generate a second actuating motion adapting a distance between the probe (1) and the sample surface using the first control signal so as to maintain at least a part of the interaction signal and/or position signal within a predetermined range, wherein the control circuit (5) comprises a second controller (52) configured to generate a second control signal, wherein the scanning probe microscope is configured to generate, using the second control signal, a third actuating motion at least partially opposing detachment-induced oscillations of the cantilever (11) induced by detaching of the tip (12) from the sample surface while retracting the probe (1).

2. The scanning probe microscope according to claim 1, comprising at least one of a first actuator (2), a second actuator or a third actuator (2), wherein the first, second or third actuator (2) is configured to generate at least one of the first, second or third actuating motion.

3. The scanning probe microscope according to claim 2, wherein the first actuator (2) is configured to generate one of the first, second or third actuating motion, wherein the second actuator is configured to generate one or two of the first, second or third actuating motion.

4. The scanning probe microscope according to claim 2 or 3, wherein the first actuator is configured to generate the first actuating motion, the second actuator is configured to generate the second actuating motion and the third actuator is configured to generate the third actuating motion.

5. The scanning probe microscope (10) according to one of the claims 2 to 4, wherein at least one of the first, second or third actuator (2) is configured to directly actuate the cantilever (11), preferably by deformation.

6. The scanning probe microscope (10) according to one of the claims 2 to 5, wherein at least one of the first, second or third actuator (2) is a piezoelectric actuator, a photothermal actuator, an electrothermal actuator, a magnetic actuator, an electrostatic actuator, a magnetostrictive actuator or an electrostrictive actuator.

7. The scanning probe microscope (10) according to one of the preceding claims, wherein the control circuit (5) is configured to determine a tip-sample interaction period and to deactivate the second controller (52) during at least a part of the tip-sample interaction period and to activate the second controller (52) during a time span outside the tip-sample interaction period.

8. The scanning probe microscope (10) according to one of the preceding claims, wherein the second control signal is proportional to the velocity or to the position or to a sum of the velocity and the position of the tip (12) with a proportional gain $k_p$.

9. The scanning probe microscope (10) according to claim 8, wherein the second controller (52) is configured to maximize the proportional gain $k_p$ up to an upper bound which, for the third actuating motion being generated by a piezoelectric actuator, is determined by the ratio $V_{max}/(\omega_d A)$ with $V_{max}$ the maximum voltage limit, $\omega_d$ the resonance frequency of the cantilever (11) and A the amplitude of the detachment-induced oscillations at the onset of the detachment-induced oscillations, or for the third actuating motion being generated by an electrothermal or photothermal actuator, is determined by the ratio $\sqrt{P_{max} R_{eq}}/(\omega_d A)$ with $P_{max}$ the maximum power limit and $R_{eq}$ the equivalent impedance of the actuator (2).

10. The scanning probe microscope (10) according to one of the preceding claims, wherein the second control signal is time delayed with respect to the interaction signal and/or position signal by a time delay $\Delta t$, wherein preferably $\Delta t = \pi/(2\omega_d)$ or $\Delta t = \pi/(\omega_d)$, with $\omega_d$ being the resonance frequency of the cantilever (11).

11. The scanning probe microscope (10) according to one of the preceding claims, wherein the scanning probe microscope is configured to generate the first actuating motion at an excitation frequency $\Omega$ which is smaller than the resonance frequency $\omega_d$ of the cantilever (11), wherein preferably $\Omega < 0.2\omega_d$, particularly preferably $\Omega < 0.1\omega_d$.

12. A method of operating a scanning probe microscope (10) according to one of the preceding claims, comprising the steps of: generating a first actuating motion changing a distance of the tip (12) with respect to the sample surface; detecting by the detector (4) a tip-sample interaction and/or tip position and outputting an interaction signal and/or position signal; generating by the first controller (51) a first control signal using the interaction signal and/or position signal; generating a second actuating motion adapting a distance between the probe (1) and the sample surface using the first control signal so as to maintain at least a part of the interaction signal and/or position signal within a predetermined range; generating by the second controller (52) a second control signal; generating, using the second control signal, a third actuating motion at least partially opposing detachment-induced oscillations of the cantilever (11) induced by detaching of the tip (12) from the sample surface while retracting the probe (1).

13. The method according to claim 12, wherein the control circuit (5) determines a tip-sample interaction period and deactivates the second controller (52) during at least a part of the tip-sample interaction period and activates the second controller (52) during a time span outside the tip-sample interaction period.

14. The method according to claim 12 or 13, wherein the second controller (52) generates a second control signal which is time delayed with respect to the tip position signal by a time delay $\Delta t$, wherein preferably $\Delta t = \pi/(2\omega_d)$ or $\Delta t = \pi/(\omega_d)$, with $\omega_d$ being the resonance frequency of the cantilever (11).

15. The method according to claim 14, wherein the control circuit (5) generates a tip-sample interaction curve with deactivated second controller (52) and extracts one or more control parameters for the second controller (52), preferably the resonance frequency $\omega_d$ of the cantilever (11), an amplitude $A$ of the detachment-induced oscillations at the onset of the detachment-induced oscillations and/or a tip-sample interaction period, from the tip-sample interaction curve with deactivated second controller (52).

16. A computer program product comprising computer program code configured to control a control circuit (5) of a scanning probe microscope (10) according to one of the claims 1 to 11 such that the control circuit (5) executes the steps of: controlling the scanning probe microscope to generate a first actuating motion changing a distance of the tip (12) with respect to the sample surface; receiving an interaction signal and/or position signal generated by the detector (4); generating a first control signal using the interaction signal and/or position signal for a second actuating motion adapting a distance between the probe and the sample surface so as to maintain at least a part of the interaction signal and/or position signal within a predetermined range; generating a second control signal for a third actuating motion at least partially opposing detachment-induced oscillations of the cantilever (11) induced by detaching of the tip (12) from the sample while retracting the probe (1).

exc

10

42

4

41

53

force
set-point

error

51

height

Cs1

2

1

11

12

31

3

S

32

(Z)

(XY)

5

Z

Y

X

Fig.1

Fig.2

Fig.3

EP 4 733 773 A1

Fig.4

Fig.5

EP 4 733 773 A1

Fig.6

Fig.7

EP 4 733 773 A1

Fig.8

20

EP 4 733 773 A1

Dissipation

(a)

(b)

Fig.9

**EUROPEAN SEARCH REPORT**

Application Number

EP 24 20 8956

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/137300 A1 (MOON CHRISTOPHER RYAN [US] ET AL) 15 May 2014 (2014-05-15) | 1-4,6-16 | INV. G01Q10/06 |
| Y | * figures 1-7 * <br> * paragraph [0021] - paragraph [0073] * <br> ----- | 5 | |
| Y | US 2019/250185 A1 (BAUR CHRISTOF [DE]) 15 August 2019 (2019-08-15) | 5 | |
| A | * figures 4-6 * <br> * paragraph [0061] - paragraph [0093] * <br> ----- | 1-4,6-16 | |
| X | KOHL D ET AL: "Active damping by Q-control for fast force-distance curve measurements in atomic force microscopy", REVIEW OF SCIENTIFIC INSTRUMENTS, AMERICAN INSTITUTE OF PHYSICS, 2 HUNTINGTON QUADRANGLE, MELVILLE, NY 11747, vol. 88, no. 12, 14 December 2017 (2017-12-14), XP012224584, ISSN: 0034-6748, DOI: 10.1063/1.4991604 [retrieved on 2017-12-14] | 1-4,6, 11,12,16 | |
| A | * figures 2-7 * <br> * paragraph [00II] - paragraph [000V] * <br> ----- | 5,7-10, 13-15 | TECHNICAL FIELDS SEARCHED (IPC) <br><br> G01Q |
| A | WO 2023/121467 A1 (NEARFIELD INSTR B V [NL]) 29 June 2023 (2023-06-29) <br> * figures 1-6 * <br> * page 10, line 6 - page 18, line 6 * <br> ----- | 1-16 | |

The present search report has been drawn up for all claims

| Place of search | Date of completion of the search | Examiner |
|---|---|---|
| Berlin | 4 April 2025 | Polesello, Paolo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 20 8956

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2025

| Patent document cited in search report | Publication date | Patent family member(s) | Publication date |
|---|---|---|---|
| US 2014137300 A1 | 15-05-2014 | NONE | |
| US 2019250185 A1 | 15-08-2019 | DE 102016221319 A1 | 03-05-2018 |
| | | GB 2569253 A | 12-06-2019 |
| | | JP 6898990 B2 | 07-07-2021 |
| | | JP 2019533813 A | 21-11-2019 |
| | | KR 20190053266 A | 17-05-2019 |
| | | TW 201830021 A | 16-08-2018 |
| | | US 2019250185 A1 | 15-08-2019 |
| | | WO 2018078011 A1 | 03-05-2018 |
| WO 2023121467 A1 | 29-06-2023 | JP 2025500968 A | 15-01-2025 |
| | | KR 20240127429 A | 22-08-2024 |
| | | NL 2030289 B1 | 30-06-2023 |
| | | US 2025067769 A1 | 27-02-2025 |
| | | WO 2023121467 A1 | 29-06-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **G. BINNIG** ; **C.F. QUATE** ; **CH. GERBER**. *Phys. Rev. Lett.*, 1986, vol. 56, 930
- **A. ROSA-ZEISER et al.** *Meas. Sci. Technol.*, 1997, vol. 8, 1333-1338
- **NIEVERGELT et al.** *Nature Nanotechnology*, 2018, vol. 13, 696-701